Europäisches Patentamt

European Patent Office

Office européen des brevets

(11) Numéro de publication: **0 364 319**
**A1**

(12) # DEMANDE DE BREVET EUROPEEN

(21) Numéro de dépôt: 89402630.1

(22) Date de dépôt: 26.09.89

(51) Int. Cl.5: **B64F 1/32**

(30) Priorité: 11.10.88 FR 8813351

(43) Date de publication de la demande:
18.04.90 Bulletin 90/16

(84) Etats contractants désignés:
BE CH DE ES FR GB GR IT LI NL SE

(71) Demandeur: BENNES MARREL
Zone Industrielle Sud - BP 56
F-42161 Andrézieux-Bouthéon Cédex(FR)

(72) Inventeur: Lambert, Bernard
Les Charmes
F-71960 Chevagny-les-Chevrières(FR)
Inventeur: Claudinon, Jean-Louis
8bis Rue des Jarretières
F-42160 Andrezieux-Boutheon(FR)

(74) Mandataire: Rinuy, Santarelli
14, avenue de la Grande Armée
F-75017 Paris(FR)

(54) Appareil de chargement/déchargement de frêt aéroportuaire à régulation automatique de niveau.

(57) Appareil de chargement et de déchargement de frêt aéroportuaire comportant sur un châssis (2) une première plate-forme élévatrice (4) commandée en niveau par de premiers vérins (10) alimentés en puissance au travers d'une unité de commande (12), ainsi qu'une seconde plate-forme élévatrice (8) adaptée à monter et à descendre entre un niveau bas et un niveau haut sensiblement identique au niveau de la première plate-forme élévatrice (4), caractérisé en ce qu'il comporte un câble (16) flexible et inextensible, un organe mobile d'accostage (15) destiné à être fixé temporairement à un point d'un avion près d'une porte de soute et fixé à une extrémité de ce câble, un organe tendeur fixé (18) à l'autre extrémité de ce câble et porté par cette première plate-forme élévatrice, et un boîtier de régulation (17) coopérant avec ce câble en sorte de déterminer des signaux de correction, et connecté à l'unité de commande par une ligne (19) adaptée à lui transmettre ces signaux de correction.

FIG 1

## Appareil de chargement/déchargement de frêt aéroportuaire à régulation automatique de niveau

L'invention concerne un appareil de chargement/déchargement de frêt aéroportuaire ("loader" en anglais).

Un tel appareil comporte deux plates-formes élévatrices montées à l'avant et à l'arrière d'un véhicule. La plate-forme avant est destinée à être mise à niveau au seuil d'une porte de soute d'avion à desservir, tandis que la plate-forme arrière effectue des mouvements d'ascenseur pour passer en alternance du niveau du sol à celui de la plate-forme avant, et réciproquement, pour permettre ainsi le chargement à partir du sol, ou le déchargement au sol d'un frêt à manutentionner.

Ces appareils existent pour divers tonnages, adaptés au chargement et au déchargement des soutes de types d'avion divers. Le frêt est le plus souvent constitué de palettes ou de conteneurs satisfaisant à des normes aéronautiques.

La manoeuvre en chargement/déchargement de ces appareils soulève diverses difficultés, dont l'une notamment est liée au fait que le niveau de la soute par rapport au sol peut varier au cours des opérations (en particulier en fonction du poids du frêt embarqué) : cela impose de modifier en conformité le niveau de la plate-forme avant de l'appareil.

Deux méthodes sont connues à ce jour pour corriger le niveau de la plate-forme avant.

Selon une première méthode, un opérateur évalue visuellement l'amplitude des corrections à effectuer et conduit manuellement le rattrapage de niveau, en agissant sur la puissance hydraulique appliquée aux vérins de manoeuvre de cette plate-forme avant.

Selon une seconde méthode plus élaborée, le rattrapage de niveau se fait de façon automatique. A cet effet, l'appareil est muni, à l'avant de la plate-forme avant, d'un dispositif rigide de palpage, comportant en pratique des crochets, que l'opérateur vient, dans une phase préalable de positionnement, assujettir aux tiroirs de fermeture du seuil de la porte de soute considérée. La liaison temporaire ainsi établie assure ensuite, par une commande électrique, ou par une liaison mécanique rigide, le maintien de la plate-forme avant au niveau du seuil de la porte.

Un inconvénient de cette deuxième solution est que l'opération préalable de positionnement, conduite manuellement, doit être menée avec beaucoup de doigté puisque l'assujettissement provisoire des crochets au seuil de la porte de soute suppose une présentation et un accostage très précis, en hauteur et en orientation, des crochets en regard de ce seuil. Cette opération peut parfois consommer un temps important.

De surcroît, comme il n'existe actuellement aucune standardisation quant à la position et à la géométrie des dispositifs de fermeture des portes d'avion, l'opérateur est souvent obligé, en fonction du type de l'avion considéré, de procéder à des opérations préliminaires de montage et de réglage, pour mettre en place un type approprié spécifique de crochets, selon une configuration (position, écartement) spécifique, ce qui rallonge la durée des manoeuvres et suppose pour les crochets des possibilités de réglage et d'interchangeabilité (avec les nécessités de stockage associées).

Enfin, il n'est pas possible dans les versions connues de cette deuxième solution, de positionner différemment la plate-forme de l'appareil par rapport au seuil de la porte de soute, selon que l'on veut procéder à un chargement ou à un déchargement. Cela pourrait pourtant faciliter parfois la manutention du frêt de prévoir un décalage de niveau entre le seuil de la porte de soute et la plateforme avant de l'appareil (positif ou négatif selon le sens de passage) qui se traduise par une petite marche vers le bas.

L'invention vise à pallier ces inconvénients en dotant la plate-forme avant d'un dispositif automatique de régulation de niveau qui soit universel (indépendant du type de porte de soute) quoique simple et fiable, facile à utiliser et offrant à l'opérateur une certaine latitude quant au choix du niveau de consigne par rapport au niveau du seuil de la porte de soute considérée.

L'invention propose à cet effet un appareil de chargement et de déchargement de frêt aéroportuaire comportant sur un châssis une première plate-forme élévatrice commandée en niveau par de premiers vérins alimentés en puissance hydraulique ou électrique au travers d'une unité de commande, ainsi qu'une seconde plate-forme élévatrice adaptée à monter et à descendre entre un niveau bas et un niveau haut sensiblement identique au niveau de la première plate-forme élévatrice, caractérisé en ce qu'il comporte un câble flexible et inextensible, un organe mobile d'accostage destiné à être fixé temporairement à un point d'un avion près d'une porte de soute de cet avion et fixé à une extrémité de ce câble, un organe tendeur fixé à l'autre extrémité de ce câble et porté par cette première plate-forme élévatrice, et un boîtier de régulation coopérant avec ce câble en sorte de déterminer des signaux de correction, et connecté à l'unité de commande hydraulique par une ligne adaptée à lui transmettre ces signaux de correction.

Selon des caractéristiques préférées non essentielles, éventuellement combinables :

- l'organe d'accostage est une ventouse ;
- cette ventouse comporte un levier de manoeuvre pour sa commande manuelle ;
- l'organe tendeur est un vérin à ressort ;
- le boîtier de régulation comporte une roue avec laquelle le câble coopère tangentiellement, ainsi qu'un disque échancré formant came muni d'un organe de rappel élastique en une position neutre, adapté à être solidarisé en rotation avec ladite roue et coopérant avec au moins deux capteurs connectés à l'unité de commande ;
- la roue est un pignon sur lequel engrène une chaîne constituant en partie le câble ;
- la roue et le disque échancré sont solidaires d'arbres adaptés à être attelés en rotation par un mécanisme d'embrayage ;
- les arbres sont coaxiaux et adaptés à être attelés en rotation avec un rapport de rotation égal à 1 ;
- au moins deux capteurs sont disposés axialement ou radialement en regard de la périphérie du disque échancré, adaptés à détecter le passage d'un flanc d'une échancrure de ce disque ;
- ces deux capteurs sont normalement en regard de cette échancrure, tandis qu'un troisième capteur est normalement en regard d'une portion pleine de ce disque échancré ;
- ce troisième capteur est adapté à commander un désattelage en rotation du disque échancré vis à vis de la roue ;
- ce boîtier de régulation est porté sous l'extrémité avant de la première plate-forme élévatrice ; et
- la première plate-forme élévatrice comporte en outre, à l'aplomb de la roue un poteau portant un guide-câble et un support pour l'organe d'accostage.

Des objets, caractéristiques et avantages de l'invention ressortent de la description qui suit, donnée à titre d'exemple non limitatif, en regard des dessins annexés sur lesquels :

- la figure 1 est une vue schématique en élévation latérale d'un appareil de chargement/déchargement de frêt aéroportuaire conforme à l'invention ;
- la figure 2, est une vue partielle en élévation latérale montrant le dispositif de régulation de niveau de l'appareil de la figure 1 ;
- la figure 3 en est une vue partielle de dessus ;
- la figure 4 en est une vue partielle, en coupe selon la ligne IV-IV des figures 2 et 3 ;
- la figure 5 est une vue, en coupe selon la ligne V-V de la figure 6, de l'organe d'accostage que comporte le dispositif des figures 2 à 4 ;
- la figure 6 en est une autre vue en coupe, selon la ligne VI-VI de la figure 5 ;

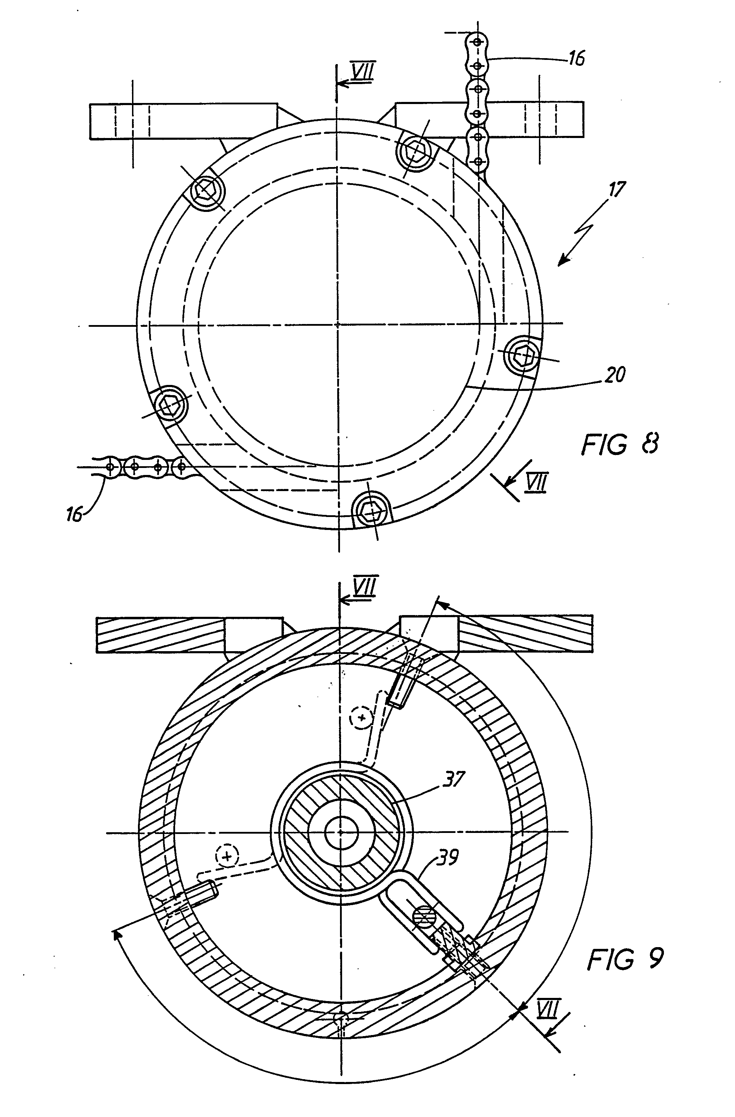

- la figure 7, est une vue en coupe axiale, selon les lignes VII-VII des figures 8 à 11, du boîtier de régulation du dispositif des figures 2 à 4 ;

- la figure 8 en est une vue de bout selon la flèche VIII de la figure 7 ;
- la figure 9 en est une vue en coupe transversale selon la ligne IX-IX de la figure 7 ;
- la figure 10 en est une vue en coupe transversale selon la ligne X-X de la figure 7 ;
- la figure 11 en est une vue de bout selon la flèche XI de la figure 7 ; et
- la figure 12 est un détail du circuit électrohydraulique de l'appareil de la figure 1, correspondant à la commande de la puissance hydraulique appliquée aux vérins de manoeuvre de la plate-forme avant.

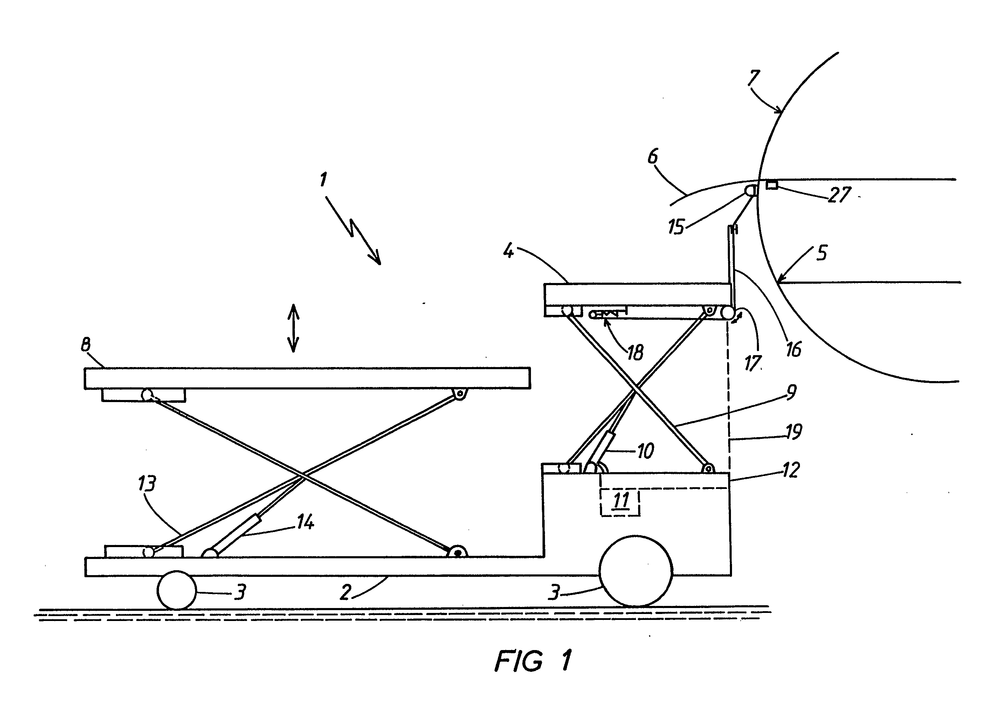

A la figure 1 est schématisé un appareil 1 de chargement et de déchargement de frêt aéroportuaire comportant, sur un châssis 2 muni de roues 3, une première plate-forme élévatrice 4 destinée à venir et rester approximativement au niveau du seuil 5 d'une porte de soute 6 d'un avion 7, et une seconde plate-forme élévatrice 8 adaptée à agir comme un ascenseur entre un niveau bas voisin du sol et un niveau haut sensiblement identique à celui de la première plate-forme élévatrice 4.

La première plate-forme élévatrice 4 est reliée au châssis par des ciseaux 9 en forme de X terminés par des galets roulant dans des glissières et est commandée en niveau par des vérins 10 alimentés par une source de puissance hydraulique 11 au travers d'une unité de commande 12.

De même la seconde plate-forme élévatrice est reliée au châssis 2 par des ciseaux 13 en forme de X et est commandée en niveau par des vérins 14 alimentés en puissance hydraulique au travers d'une unité de commande (non représentée).

Selon l'invention, la première plate-forme élévatrice 4 porte un dispositif de régulation de niveau comportant un organe mobile d'accostage 15 destiné à être lié temporairement à l'avion, en un point quelconque de celui-ci, et fixé à une extrémité d'un câble flexible inextensible 16, un boîtier de régulation (ou boîtier de correction) 17, lié à la plate-forme 4 coopérant avec ce câble, et un organe tendeur 18 lié à la plate-form 4 et fixé à l'autre extrémité du câble. Le boîtier de régulation 17 est connecté à l'unité de commande 12 des vérins de cette première plate-forme 4 par une ligne 19.

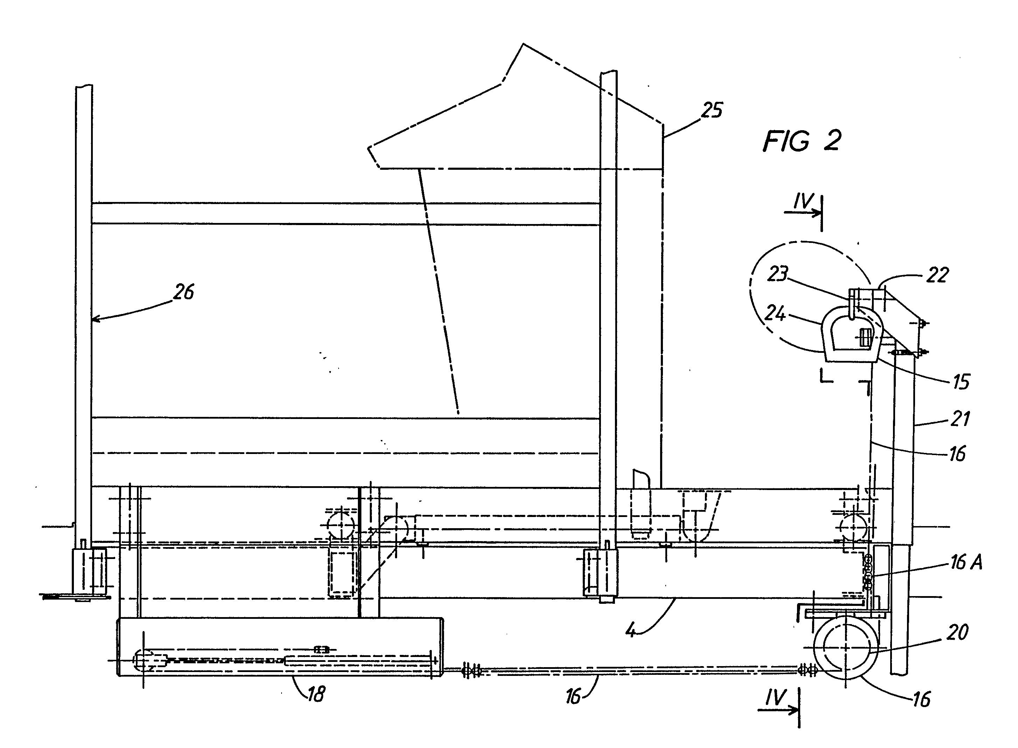

Ainsi qu'il ressort des figures 2 à 4, le boîtier de régulation 17 est porté à l'avant de la première plate-forme élévatrice 4, et comporte une roue ou pignon 20 sur laquelle le câble s'enroule sur environ 90˚. A cet effet, au moins un tronçon 16A de ce câble est constitué par une chaîne. L'avant de cette première plate-forme élévatrice 4 porte par ailleurs, sensiblement à la verticale de cette roue, un poteau 21 portant à sa partie supérieure un guide 22 pour le câble, et un arceau 23 adapté à recevoir une anse 24 de l'organe d'accostage 15 lorsque celui-ci n'est pas accosté à la carlingue de l'avion.

Quant à l'organe tendeur 18 il est fixé sous la première plate-forme élévatrice, sensiblement au niveau de la roue 20 du dispositif de régulation 17. Il s'agit ici d'un vérin à ressort.

Sur la figure 2 est schématisé en traits mixtes un pupître de commande 25 sur lequel peut agir un opérateur, et une rambarde 26. Sur la figure 1 est en outre schématisé en 27 un dispositif de commande de manutention lié à l'avion.

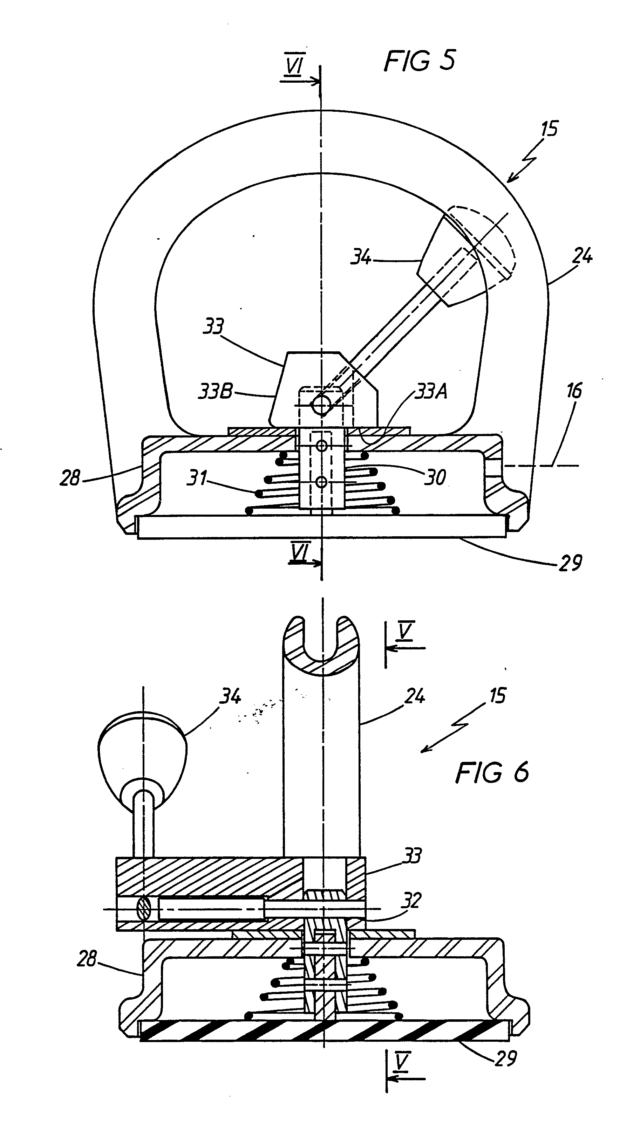

Ainsi que cela ressort des figures 5 et 6, l'organe d'accostage 15 est avantageusement une ventouse de tout type connu, adapté à s'appliquer sur n'importe quelle zone de la carlingue bordant la porte de la soute de l'avion.

Cet organe comporte ainsi une cloche 28, adaptée à être appliquée contre une surface sur laquelle cet organe doit être accosté, dans laquelle est placé un disque souple 29 adapté à se déformer élastiquement vers le fond de la cloche. Ce disque souple 29 est lié en son centre à un doigt 30 entouré par un ressort 31 et traverse le fond de la cloche. Au travers d'une extrémité de ce doigt est disposée une goupille 32 engagée dans un barreau 33 disposé radialement par rapport à la cloche et présentant des faces 33A et 33B situées à des distances différentes de cette goupille. Ce barreau est muni d'un levier 34 permettant de commander un basculement de ce barreau entre des positions dans lesquelles, soit la face 33A, soit la face 33B est appliquée par le ressort 31 contre le fond de la cloche. Dans l'une des positions (voir figures 5 et 6) le disque souple 29 est sensiblement plan tandis que dans l'autre position ce disque se déforme en provoquant un effet de dépression.

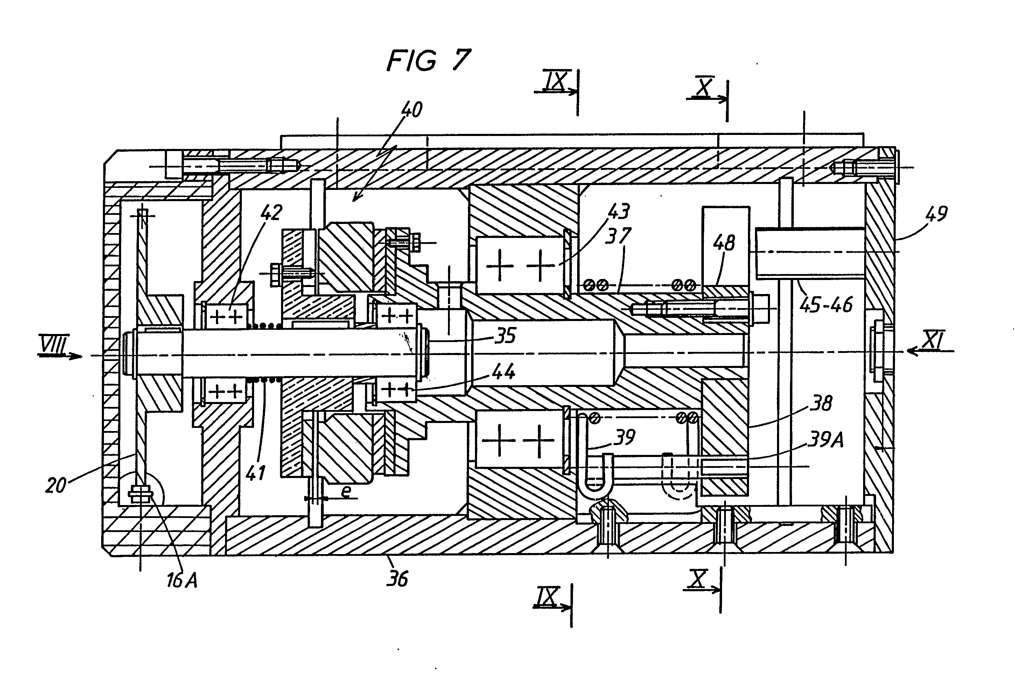

Le pignon 20 du boîtier de régulation 17 est, ainsi qu'il ressort de la figure 7, solidaire d'un premier arbre 35 disposé sensiblement suivant l'axe d'un carter cylindrique 36 contenant les composants de ce boîtier. Ce pignon 20 est protégé par une bride 36A muni d'orifices pour le passage de la chaîne.

Un deuxième arbre 37, en partie creux, coaxial au premier arbre 35, porte un disque échancré ou came d'asservissement 38. A ce disque est associé un système de rappel élastique 39 tendant à la ramener élastiquement en une position angulaire neutre ; il s'agit ici de ressorts de torsion prenant appui sur un doigt axial 39A (par exemple porté par le pupître 25).

Un dispositif d'embrayage 40, commandé par un levier de manoeuvre non représenté, est prévu pour solidariser ou dissocier, à volonté, les arbres 35 et 37. Il s'agit par exemple d'un embrayage électrique magnétique, et la solidarisation ou la dissociation des arbres se fait par rattrapage ou création d'un jeu axial e entre des surfaces de friction, par débattement axial du premier arbre 35 à l'encontre d'un ressort 41.

Ces arbres sont engagés dans des roulements 42 et 43 portés par le carter 36, tandis qu'un troisième roulement 44 est disposé radialement entre les deux arbres.

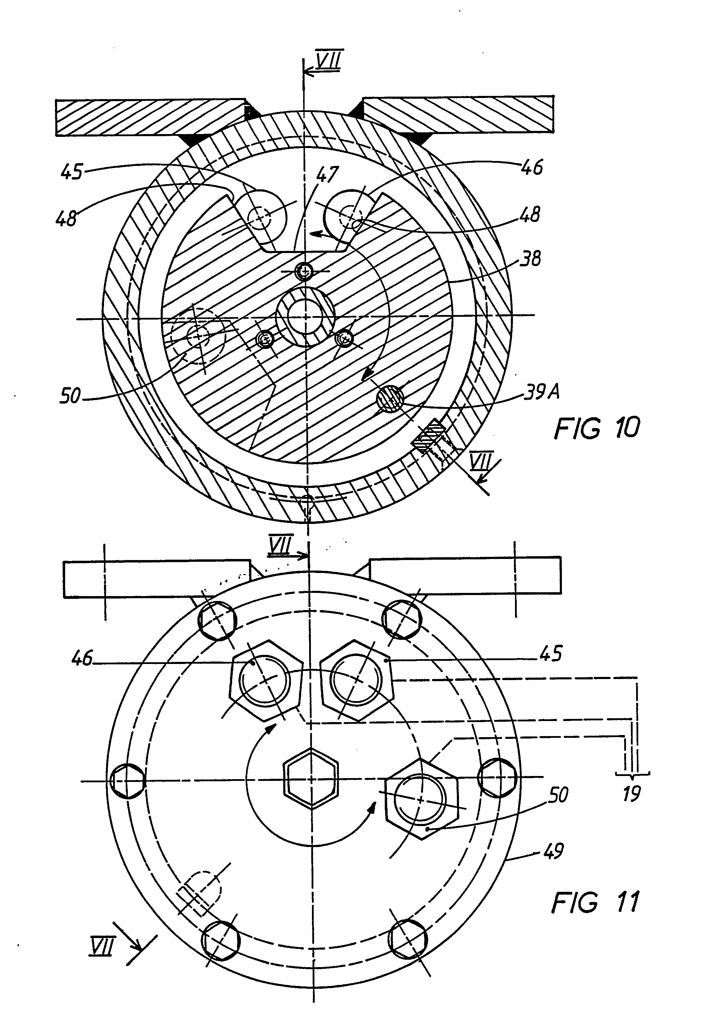

En regard axialement de la périphérie du disque échancré 38 sont disposés deux détecteurs 45 et 46 décalés angulairement d'un angle donné (par exemple égal à 50°, voir figures 10 et 11).

Ces capteurs sont par exemple des capteurs de proximité et sont normalement en regard d'une échancrure 47 ménagée dans le disque échancré, de préférence disposés de façon symétrique par rapport au plan axial de symétrie de cette échancrure en position neutre du disque. Cette échancrure 47 est bordée par des flancs sensiblement radiaux 48 décalés angulairement d'un angle supérieur au décalage angulaire des capteurs 45 et 46, par exemple égal à 60°.

Ces capteurs sont portés par une bride 49 fermant le carter cylindrique 36.

De manière préférée pour des raisons de sécurité, un troisième capteur 50 est prévu, à une même distance à l'axe que les capteurs 45 et 46. Ce capteur est normalement en regard d'une partie pleine du disque échancré 38 et est destiné à détecter le passage accidentel de l'échancrure 47 devant lui.

Les capteurs 45 et 46 sont respectivement adaptés à repérer une remontée ou un abaissement du niveau de la plate-forme 4 par rapport au point d'accostage sur l'avion de l'organe d'accostage 15. Et le capteur de sécurité 50 est adapté à repérer le cas où la chaîne 16A fait tourner le disque échancré 38, non pas en raison d'une variation de niveau de la plate-forme élévatrice 4, mais parce que l'organe d'accostage s'est détaché de l'avion.

Ces capteurs 45, 46 et 50 sont raccordés à la ligne 19 de liaison à l'unité de commande 12.

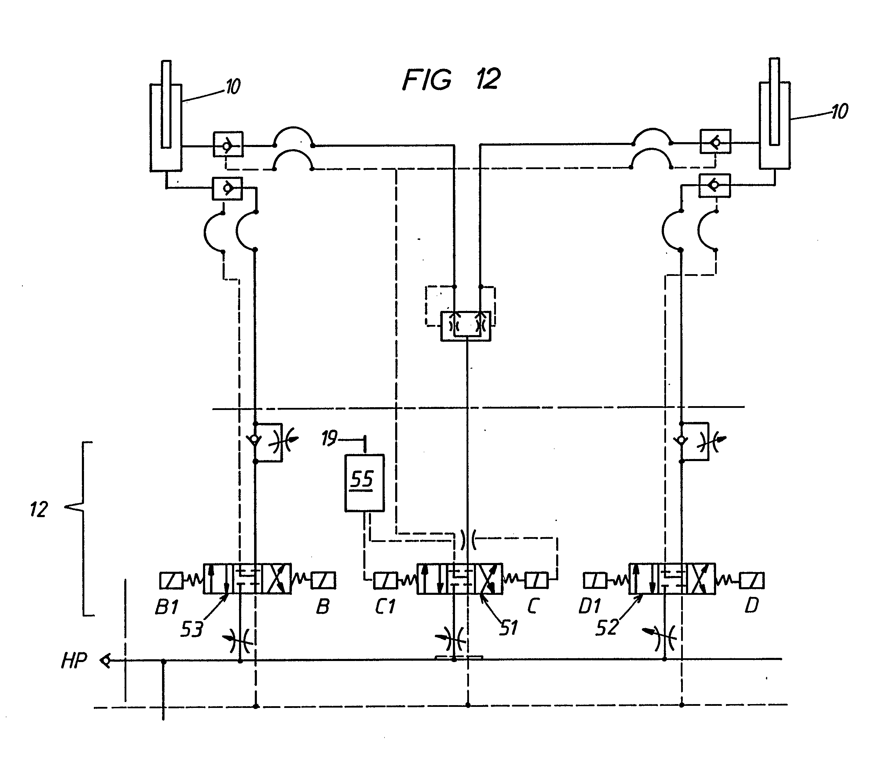

Un détail du circuit électrohydraulique de celui-ci est représenté à la figure 12.

Ce circuit comporte notamment un distributeur à commande électrique 51 (ou des électro-valves).

Selon que le capteur 45 ou le capteur 46 détecte le passage d'un flanc 48 de l'échancrure, un boîtier 55 auquel aboutit la ligne 19 applique d'un côté ou de l'autre du distributeur 52 un signal de manoeuvre approprié. L'excitation du côté C provoque la montée de la plate-forme et l'excitation du côté C1 en provoque la descente. Cette utilisation peut être considérée comme prioritaire.

Sur ce circuit de la figure 12 apparaissent également des distributeurs 52 et 53 destinés respectivement à assurer une commande de montée ou descente rapide de la passerelle avant, et, également, de procurer en commande manuelle de cette même plate-forme (système non assisté), un effort de biais ("twistage") par alimentation indépendante des vérins 10.

En variante non représentée le disque échancré coopère avec deux ou plusieurs capteurs disposés radialement en regard de la tranche du disque 38.

En fonctionnement, l'opérateur commence par effectuer une jonction avec l'avion, grâce à l'organe d'accostage 15. Le boîtier de régulation 17 étant en mode débrayé, il conduit ensuite de façon manuelle, par action sur les organes habituels de commande de la première plate-forme élévatrice 4, en pratique situés sur le pupître 25, une mise à niveau de cette première plate-forme élévatrice avec le seuil 5 de la porte de soute considérée. Cette opération peut être qualifiée d'opération d'apprentissage. Comme cette opération est séparée de l'établissement d'une jonction avec l'avion, elle est plus facile et plus rapide que dans les solutions connues où ces opérations étaient quasi-simultanées ; en outre, l'opérateur est libre d'imposer un décalage de niveau (par exemple de ± 5 mm) dans le sens qu'il souhaite. Pendant ce temps, le disque échancré 38 reste en position neutre.

Par manoeuvre d'un organe de commande du dispositif d'embrayage 40 du boîtier de régulation il solidarise les arbres 35 et 37, l'arbre 37 étant dans sa position neutre telle que déterminée par l'organe de rappel 39.

La jonction de l'appareil avec l'avion est effectuée en une zone de l'avion telle que le tronçon du câble qui s'étend de l'organe d'accostage 15 au guide-câble 22 ne soit pas horizontal, grâce à quoi toute variation de niveau de l'avion se traduit par un glissement du câble dans le guide-câble, et une rotation forcée, dans un sens ou dans l'autre, du pignon 20 du boîtier de régulation, et donc du disque échancré 38. Dès que la rotation de cette dernière est suffisante pour amener un flanc 48 du disque échancré en regard de l'un 45 ou 46 des capteurs, un signal électrique est transmis par celui-ci, le long de la ligne 19, jusqu'à l'unité de commande 12, et active l'un ou l'autre des côtés du distributeur électrohydraulique 50, de façon à ramener la plate-forme élévatrice 4 vers son niveau de consigne, jusqu'à ce que le capteur considéré cesse d'être excité.

La différence entre l'angle des flancs 48 et l'écartement angulaire entre les capteurs 45 et 46 détermine donc l'amplitude tolérée des fluctuations de niveau de la plate-forme élévatrice 4 (cette amplitude de tolérance est par exemple de l'ordre de 5 mm). Si nécessaire, un jeu de pignons peut être prévu pour augmenter ou réduire le rapport de rotation entre les arbres 35 et 37.

Ce qui précède vaut également pour le cas où il n'y aurait pas de guide-câble 22 : il faudrait seulement que le câble 16 ne soit pas horizontal entre le point de jonction avec l'avion et le boîtier de régulation. De plus, le principe de l'invention vaut également pour d'autres configurations relatives du boîtier 17 et du dispositif tendeur : ils pourraient tout aussi bien être alignés dans un plan vertical ou incliné.

La position neutre du disque échancré correspond de préférence, mais pas nécessairement, à une position médiane entre les positions où l'un ou l'autre des capteurs 45 et 46 est excité, respectivement.

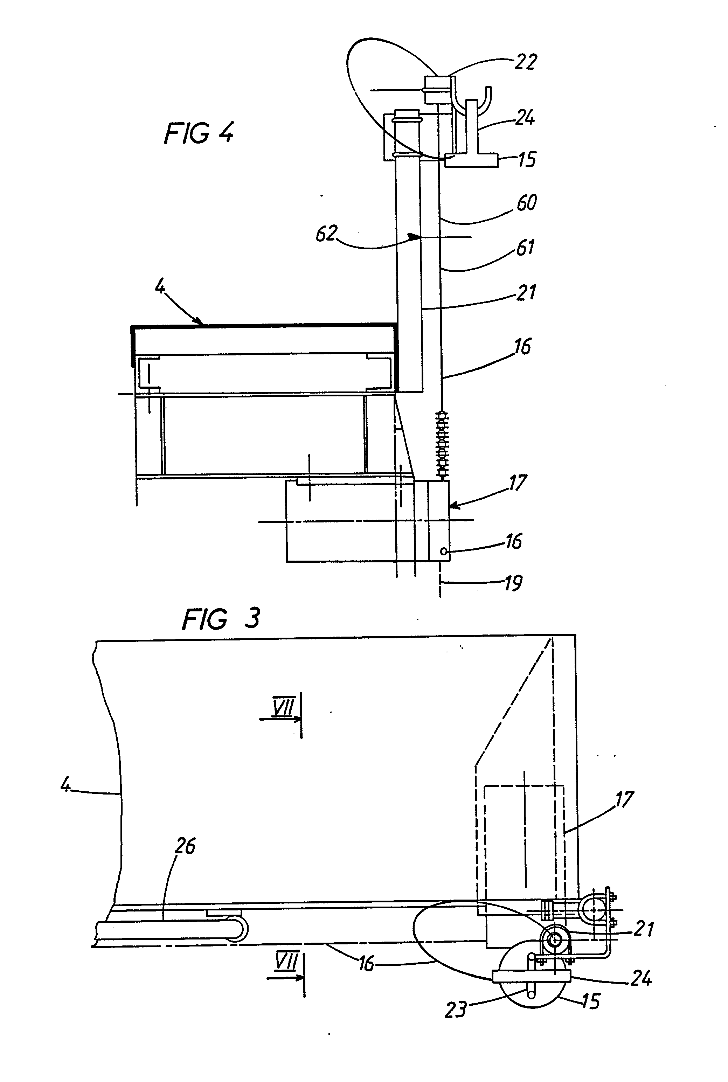

De manière préférée, le point de jonction de l'organe d'accrochage 15 à l'avion est choisi en sorte que la tension du câble soit comprise entre deux valeurs de seuil prédéterminées. A cet effet, des repères 60 et 61 (voir la figure 4) sont avantageusement prévus sur le câble, et un repère 62 est prévu sur le poteau 21, le point de jonction à l'avion étant choisi de façon à ce que le repère 62 soit entre les repères 60 et 61. En variante non représentée, les repères 60 à 62 sont portés par le poteau et le câble respectivement.

En pratique, du fait de l'hystérésis des amortissements, des mouvements intempestifs de grande amplitude peuvent intervenir, avec variation rapide du niveau de l'avion. Dans ce cas cette information est prise en compte et l'opération de contact conforme à ce déplacement est mémorisée sur un angle de 135° environ, soit 150 mm de dénivelé.

De ce fait, la correction de niveau sera retardée mais effectuée sans fluctuations violentes intempestives.

Ce capteur 50 sert à repérer un éventuel décrochage de l'organe d'accostage et inhibe, le cas échéant, la correction de niveau de la plate-forme amovible 4 qui reste en position. L'opérateur n'a plus alors qu'à recommencer l'accostage et la phase d'apprentissage. Il en sera de même si la montée ou la descente est trop importante : le capteur 50 agit par exemple sur le dispositif d'embrayage 40 pour dissocier les arbres 35 et 37.

En pratique toute intervention manuelle de l'opérateur inhibe, soit la liaison entre ces arbres 35 et 37, soit la prise en compte par l'unité 12 des signaux des capteurs 45, 46 ou 50.

Ainsi, dans le principe de mécanisation de la passerelle, toute variation en altitude, qui est réalisée à la base d'une source énergie hydraulique, alimentant deux vérins d'élévation contrôlés par une électro-valve, les informations transmises ne réalisent qu'une commande de ± Z, dans un plan vertical.

Il arrive que sur certains sites de chargement, et également en fonction des répartitions des charges de l'avion, il existe différentes altitudes entre le point extérieur gauche et droit de la porte à désservir : l'appareil peut réagir comme suit :

1/ le plan sur lequel vient se réceptionner le véhicule et se stopper par un dispositif de béquillage, présente un défaut originel par rapport à celui où est stationné l'avion.

Lors de l'apprentissage, et par une commande indépendante des deux vérins d'élévation, on réalise une mise en conformité des deux plans avec un léger biais (palette twistage).

Cette correction originelle ayant été effectuée lors de la mise en automatique, et, ceci par une valve hydraulique définissant d'une façon précise le débit pour l'alimentation de chacun des deux vérins d'élévation, on aura une montée parallèle de la plate-forme par rapport au plan défini. Donc, le système accepte un défaut de twistage originel.

2/ Si l'on admet que certains avions ont des défauts de planéité du fait de chargements ou déchargements importants, nos véhicules pourront être équipés de deux systèmes indépendants, l'un côté droit, l'autre côté gauche, de manière à effectuer une correction indépendante de chaque vérin d'élévation (twistage permanent et contrôlé).

Il va de soi que la description qui précède n'a été proposée qu'à titre d'exemple non limitatif et que de nombreuses variantes peuvent être proposées par l'homme de l'art sans sortir du cadre de l'invention.

Ainsi, en particulier, l'appareil décrit en regard des dessins a ses mouvements d'élévation plate-forme et d'élévation passerelle mus à l'aide de l'énergie hydraulique, mais la présente invention est toujours valable si l'énergie hydraulique est remplacée par une énergie électrique, les vérins 10 ou 14 étant des vérins du type électrique.

## Revendications

1. Appareil de chargement et de déchargement de frêt aéroportuaire comportant sur un châssis (2) une première plate-forme élévatrice (4) commandée en niveau par de premiers vérins (10) alimentés en puissance au travers d'une unité de commande (12), ainsi qu'une seconde plate-forme élévatrice (8) adaptée à monter et à descendre entre un niveau bas et un niveau haut sensiblement identique au niveau de la première plate-forme élévatrice (4), caractérisé en ce qu'il comporte un câble (16) flexible et inextensible, un organe mobile d'accostage (15) destiné à être fixé temporairement à un point d'un avion près d'une porte de soute de cet avion et fixé à une extrémité de ce câble, un organe tendeur fixé (18) à l'autre extrémité de ce câble et porté par cette première plate-forme élévatrice, et un boîtier de régulation (17) coopérant avec ce câble en sorte de déterminer des signaux de correction, et connecté à l'unité de commande par une ligne (19) adaptée à lui transmettre ces signaux de correction.

2. Appareil de chargement et de déchargement de frêt aéroportuaire selon la revendication 1, caractérisé en ce que l'organe d'accostage (15) est une ventouse.

3. Appareil de chargement et de déchargement de frêt aéroportuaire selon la revendication 2, caractérisé en ce que cette ventouse comporte un levier de manoeuvre (34) pour sa commande manuelle.

4. Appareil de chargement et de déchargement de frêt aéroportuaire selon l'une quelconque des revendications 1 à 3, caractérisé en ce qui l'organe tendeur (18) est un vérin à ressort.

5. Appareil de chargement et de déchargement de frêt aéroportuaire selon l'une quelconque des revendications 1 à 4, caractérisé en ce que le boîtier de régulation (17) comporte une roue (20) avec laquelle le câble (16) coopère tangentiellement, ainsi qu'un disque échancré formant came (38) muni d'un organe (39) de rappel élastique en une position neutre, adapté à être solidarisé en rotation avec ladite roue (20) et coopérant avec au moins deux capteurs (45, 46, 50) connectés à l'unité de commande (12).

6. Appareil de chargement et de déchargement de frêt aéroportuaire selon la revendication 5, caractérisé en ce que la roue (20) est un pignon sur lequel engrène une chaîne (16A) constituant en partie le câble (16).

7. Appareil de chargement et de déchargement de frêt aéroportuaire selon la revendication 5 ou la revendication 6, caractérisé en ce que la roue (20) et le disque échancré (38) sont solidaires d'arbres (35, 37) adaptés à être attelés en rotation par un mécanisme d'embrayage (40).

8. Appareil de chargement et de déchargement de frêt aéroportuaire selon l'une quelconque des revendications 5 à 7, caractérisé en ce que les arbres sont coaxiaux et adaptés à être attelés en rotation avec un rapport de rotation égal à 1.

9. Appareil de chargement et de déchargement de frêt aéroportuaire selon l'une quelconque des revendications 5 à 8, caractérisé en ce qu'au moins deux capteurs (45, 46) sont disposés axialement ou radialement en regard de la périphérie du disque échancré, adaptés à détecter le passage d'un flanc d'une échancrure (47) de ce disque.

10. Appareil de chargement et de déchargement de frêt aéroportuaire selon la revendication 9, caractérisé en ce que ces deux capteurs sont normalement en regard de cette échancrure, tandis qu'un troisième capteur (50) est normalement en regard d'une portion pleine de ce disque échancré.

11. Appareil de chargement et de déchargement de frêt aéroportuaire selon la revendication 10, caractérisé en ce que ce troisième capteur est adapté à commander un désattelage en rotation du disque échancré (38) vis à vis de la roue.

12. Appareil de chargement et de déchargement de frêt aéroportuaire selon l'une quelconque des revendications 5 à 11, caractérisé en ce que ce boîtier de régulation est porté sous l'extrémité avant de la première plate-forme élévatrice (4).

13. Appareil de chargement et de déchargement de frêt aéroportuaire selon la revendication 12, caractérisé en ce que la première plate-forme élévatrice (4) comporte en outre, à l'aplomb de la roue (20) un poteau (21) portant un guide-câble (22) et un support (23) pour l'organe d'accostage (15).

FIG 1

FIG 2

FIG 4

FIG 3

FIG 5

FIG 6

FIG 7

EP 0 364 319 A1

FIG 8

FIG 9

*FIG 10*

*FIG 11*

FIG 12